(19) Europäisches Patentamt

European Patent Office

Office européen des brevets

(11) **EP 1 313 341 B1**

(12) **EUROPÄISCHE PATENTSCHRIFT**

(45) Veröffentlichungstag und Bekanntmachung des Hinweises auf die Patenterteilung:
**05.10.2005 Patentblatt 2005/40**

(51) Int Cl.$^7$: **H04Q 7/38**

(21) Anmeldenummer: **02025506.3**

(22) Anmeldetag: **12.11.2002**

(54) **Verfahren zur Auswahl einer geeigneten Basisstation in einem Mehrzellen-Funksystem sowie mobiles Telekommunikations-Endgerät**

Suitable base station selection method in a cellular radio system and mobile telecommunication device

Procédé de sélection de stations de base utilisables dans un système radio cellulaire et appareil de télécommunication

(84) Benannte Vertragsstaaten:
**AT BE BG CH CY CZ DE DK EE ES FI FR GB GR IE IT LI LU MC NL PT SE SK TR**

(30) Priorität: **17.11.2001 DE 10156642**

(43) Veröffentlichungstag der Anmeldung:
**21.05.2003 Patentblatt 2003/21**

(73) Patentinhaber: **Tenovis GmbH & Co. KG**
**60326 Frankfurt am Main (DE)**

(72) Erfinder:
  • **Kammoun, Khalil**
    **60325 Frankfurt (DE)**
  • **Rommel, Joachim**
    **64546 Mörfelden-Walldorf (DE)**
  • **Ness, Reto**
    **65817 Eppstein (DE)**

(74) Vertreter:
**Patentanwaltskanzlei WILHELM & BECK**
**Nymphenburger Strasse 139**
**80636 München (DE)**

(56) Entgegenhaltungen:
**WO-A-99/41854          WO-A-99/62278**
**US-A- 6 061 337**

**Beschreibung**

Die Erfindung geht aus von einem Verfahren zur Auswahl einer geeigneten Basisstation bei einem Mehrzellen-Funksystem, wobei ein mobiles Telekommunikations-Endgerät, beispielsweise ein Handy, beim Roaming oder Handover von einer jetzigen Basisstation zu einer anderen geeigneten Basisstation wechselt, mit der die Funkverbindung besser ist.

Bei bekannten Mehrzellen-Funksystemen, die beispielsweise nach dem DECT- (Digital Enhanced Cordless Telecommunication), Bluetooth- Standard oder dergleichen aufgebaut sind, wird die Topologie des Mehrzellen-Funksystems, insbesondere die Lage und Anordnung der einzelnen Basisstationen, nicht automatisch eingemessen. Vielmehr muss ein einzelnes mobiles Endgerät, das sich in einem Telekommunikationsnetz befindet, aktiv nach einer geeigneten, benachbarten Basisstation suchen, auf die es beispielsweise beim sogenannten 'Handover', d.h. beim Wechseln der Funkzelle während einer aktiven Verbindung, umschalten kann. Das gleiche Problem besteht auch beim sogenannten 'Roaming', d.h. beim Wechsel der Funkzelle ohne aktive Verbindung, wenn lediglich die Verbindung zum betriebsbereiten mobilen Telekommunikations-Endgerät aufrechterhalten wird.

Das Auswählen einer für einen besseren Empfang geeigneten Basisstation ist relativ schwierig, da die bestehenden Empfangsbedingungen zum Beispiel in einer bergischen Landschaft, in bebauten Gebieten oder in Gebäuden sehr starken Schwankungen unterliegen können. Andererseits kann aus technischen und rechtlichen Gründen nicht die Sendeleistung des mobilen Telekommunikations-Endgerätes beliebig gesteigert werden, um eine aktive Funkverbindung zu einer Basisstation unter allen Umständen aufrechtzuerhalten.

Wenn die Empfangsfeldstärke immer schlechter wird, weil sich zum Beispiel das mobile Telekommunikations-Endgerät immer weiter von der aktiven Basisstation entfernt, wurde bisher durch Ausmessen des Funkfeldes in der Regel auf eine andere, günstiger gelegene Basisstation umgeschaltet, zu der die Sende- und Empfangsbedingungen besser sind. Bei bekannten Funknetzen besteht die Schwierigkeit jedoch darin, dass bisher das mobile Telekommunikations-Endgerät zunächst das Funknetz ausmessen und nach einer Bewertung der Messergebnisse eine geeignete Basisstation auswählen musste, was mit einem erheblichen Energie- und mit einem gewissen Zeitaufwand verbunden war. Insbesondere bei Batterie betriebenen Geräten ist der zusätzliche Stromverbrauch unerwünscht.

Aus der WO 99/41854 ist ein Verfahren mit den Merkmalen des Oberbegriffs des Anspruchs 1 bekannt. WO 99/62278 beschreibt ein Verfahren zur Auswahl einer geeigneten Basisstation in einem Mehrzellen-Funksystem, bei dem ein Telekommunikations-Endgerät von zwei Basisstationen jeweils eine Nachbarzellenliste empfängt.

Aufgabe der vorliegenden Erfindung ist es ein verbessertes Verfahren bereitzustellen, mit dem mobile Telekommunikations-Endgeräte eine geeignete Basisstation finden, auf die sie wechseln können, ohne vorher aktiv nach Basisstationen suchen zu müssen.

Diese Aufgabe wird mit einem Verfahren gemäß Anspruch 1 gelöst. Bevorzugte Weiterbildungen sind in den abhängigen Ansprüchen angegeben.

Das erfindungsgemäße Verfahren zur Auswahl einer geeigneten Basisstation in einem Mehrzellen-Funksystem hat demgegenüber den Vorteil, dass das Funknetz von dem mobilen Telekommunikations-Endgerät nicht mehr ausgemessen werden muß, da die relevanten Daten zum Wechsel auf eine geeignete Basisstation in der Nachbarzellenliste schon gespeichert sind. Als besonders vorteilhaft wird dabei angesehen, dass die Auswahl für die geeignete Basisstation mittels eines vorgegebenen Algorithmus erfolgt. Durch diese Maßnahmen wird erreicht, dass der Wechsel schneller erfolgt und das mobile Telekommunikations-Endgerät zusätzlich noch wertvolle (Batterie-) Energie spart.

Als besonders vorteilhaft wird dabei Angesehen, dass der Algo rithmus den relativen Abstand der Basisstationen zueinander nutzt, da dieser Parameter beispielsweise für die Bestimmung der Funkfeldstärke sehr wichtig ist.

Um weiterhin feststellen zu können, welche der benachbarten Basisstationen näher zum mobilen Telekommunikations-Endgerät liegt, wird in vorteilhafter Weise auch deren relativer Abstand erfasst.

Die relativen Abstände zwischen dem mobilen Telekommunikations-Endgerät und den einzelnen Basisstationen werden vorteilhaft durch den RSSI-Faktor (Receiver Signal Strength Indicator) bestimmt. So können die einzelnen Empfangsfeldstärken der benachbarten Basisstationen miteinander vergleichen und somit die Basisstation mit der stärksten Funkfeldstärke herausgefiltert werden.

Bei der permanenten Überprüfung der Verbindungsqualität ist es auch wichtig, dass der Algorithmus unterscheiden kann, ob sich das mobile Telekommunikations-Endgerät in Richtung auf die Basisstation zu bewegt, sich von dieser entfernt oder der Abstand etwa gleich groß bleibt. Bewegt sich beispielsweise das mobile Telekommunikations-Endgerät auf die Basisstation zu, dann kann damit gerechnet werden, dass sich die Funkfeldstärke verstärkt und das mobile Telekommunikations-Endgerät mit einer geringeren Sendeleistung und damit mit einem geringeren Stromverbrauch auskommt. Weiterhin ist damit zu rechnen, dass die Funkverbindung zu der ausgewählten Basisstation länger bestehen bleibt, als wenn sich das mobile Telekommunikations-Endgerät von dieser Basisstation wegbewegt.

Eine optimale Lösung für den Algorithmus ergibt sich, wenn er die oben genannten Unterscheidungsmerkmale bezüglich der Bewegungsrichtung berücksichtigt. Das erfolgt am Einfachsten durch einen Vergleich der Abstände des mobilen Telekommunikations-Endgerätes zu zwei überwachten Basisstationen mit deren Abstand voneinander. Befindet sich beispielsweise das mobile Telekommunikations-Endgerät in der Nähe der einen Basisstation und ist die Differenz d1-d2 größer als der halbe Abstand der beiden benachbarten Basisstationen BS1 und BS2 selbst, dann kann angenommen werden, das sich das mobile Telekommunikations-Endgerät seitlich bewegt.

Welche der benachbarten Basisstationen letztlich die geeignete Station für Roaming oder Handover ist, wird vorteilhaft an Hand einer Kandidatenliste ermittelt. In der Kandidatenliste sind die benachbarten Basisstationen mit ihrer aktuellen Bewertung angegeben, so dass das mobile Telekommunikations-Endgerät ohne zusätzlichen Messaufwand für die Funkfeldstärke sofort entscheiden kann, zu welcher Basisstation es wechseln muss.

Die Berechnung der entsprechenden Kandidatenliste erfolgt dabei auf einfache Weise mit Hilfe der Werte der Nachbarschaftsliste und der RSSI-Werte der Verbindungen zu den beiden überwachten Basisstationen.

Für den zweiten und dritten Fall, das die Differenz der Abstände zwischen dem mobilen Telekommunikations-Endgerät und den zwei überwachten Basisstationen kleiner oder gleich ist dem halben Abstand zwischen den beiden Basisstationen, wird die Kandidatenliste durch Bildung der Betragsdifferenz ermittelt. Bei dieser Konstellation ist annehmbar, dass sich das mobile Telekommunikations-Endgerät von den beiden Basisstationen weg bewegt, so dass unter Umständen die Sendeleistung verstärkt und eventuell schon bald auf eine weitere Basisstation geschaltet werden muss.

Bei dem mobilen Telekommunikations-Endgerät wird als Vorteil angesehen, dass die Nachbarzellenliste und/oder auch weitere Parameter in einem DRAM-Speicher abgelegt sind. Ein derartiger Speicher ist für beliebige Daten leicht verwendbar und einfach handhabbar.

Der Erfindung liegt die Aufgabe zu Grunde, bei einem Mehrzellen-Funksystem die Auswahl einer geeigneten Basisstation zu vereinfachen. Diese Aufgabe wird mit den Merkmalen des nebengeordneten Ansprchs 1 gelöst.

Zwei Ausführungsbeispiele der Erfindung sind in der Zeichnung dargestellt und werden in der nachfolgenden Beschreibung näher erläutert.

Figur 1     zeigt ein erstes Ausführungsbeispiel der Erfindung,
Figur 2     zeigt eine zugeordnete erste Tabelle,
Figur 3     zeigt ein zweites Ausführungsbeispiel der Erfindung,
Figur 4     zeigt eine zugeordnete zweite Tabelle und
Figur 5     zeigt ein Blockshaltbild in schematischer Ausführung.

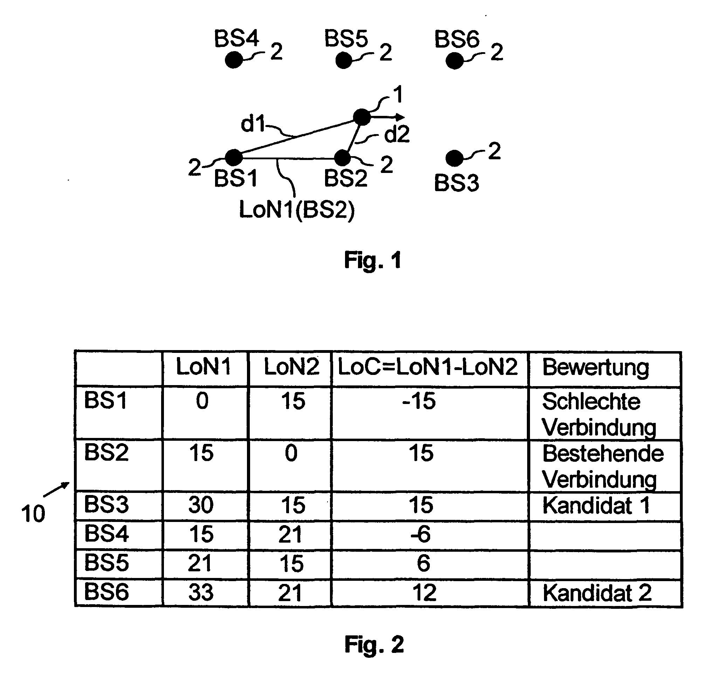

Figur 1 zeigt ein erstes Ausführungsbeispiel der Erfindung, bei dem sich ein mobiles Telekommunikations-Endgerät 1 in einem Mehrzellen-Funksystem mit einer Vielzahl von Basisstationen 2 befindet. Es wird angenommen, dass alle Basisstationen 2 (BS1 bis BS6) sowie das mobile Telekommunikations-Endgerät 1 eingeschaltet sind. Das mobile Telekommunikations-Endgerät 1 kann nach einem der bekannten Standards wie DECT, Bluetooth usw. arbeiten. Es kann als sogenanntes Handy für die Sprach-und/oder Datenübertragung ausgebildet sein. Alternativ kann es aber auch ein Faxgerät oder ein tragbarer Computer (Laptop) mit einer entsprechenden Funkschnittstelle sein.

Die Basisstationen 2 (BS1 bis BS6) sind in dem Funknetz räumlich verteilt angeordnet, wobei deren relativer Abstand zueinander in Abhängigkeit von den örtlichen Gegebenheiten festgelegt wurde. Ihre Funkfelder überschneiden sich zumindest teilweise, so dass das mobile Telekommunikations-Endgerät 1 die Funkfelder mehrerer benachbarter Basisstationen 2 empfangen kann, allerdings mit unterschiedlicher Feldstärke. Dadurch ist gewährleistet, dass das mobile Telekommunikations-Endgerät 1 stets mit einer der Basisstationen BS1 bis BS6 über das Funknetz in Verbindung steht, wenn es sich in dem betreffenden Gebiet stationär befindet oder in dem Gelände bewegt.

Wegen der begrenzten Reichweiten der Sendeeinrichtungen sowohl im mobilen Telekommunikations-Endgerät 1 als auch in den Basisstationen 2 (BS1 bis BS6) muss beim Wechsel von einer Basisstation 2 zu der entsprechenden geeigneten neuen Basisstation 2 eine aktive oder auch eine passive Verbindung (Handover bzw. Roaming) weitergeschaltet werden.

Bei der Auswahl einer geeigneten Basisstation 2 musste bisher diese Aufgabe beim bekannten Stand der Technik das mobile Telekommunikations-Endgerät 1 selbst übernehmen und zunächst die Topologie, d. h. insbesondere die Funkfeldstärken aller empfangbaren Basisstationen 2 messen und dann auf Grund der ausgewerteten Daten entscheiden, zu welcher Basisstation 2 es wechseln muss.

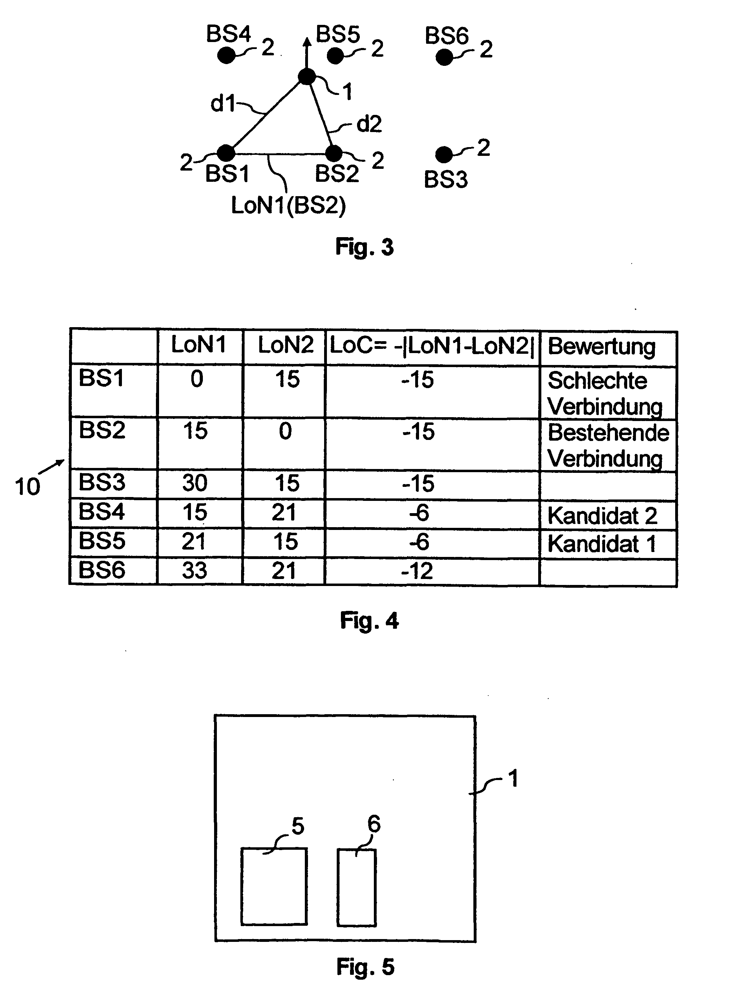

Beim Erfindungsgegenstand ist dagegen in einem Speicher 6, vorzugsweise einem DRAM, wie zu Figur 5 später noch erläutert wird, u.a. eine Kandidatenliste 10 abgelegt, in der relevante Parameter wie das Ergebnis der letzten Algorithmus-Berechnung sowie die Nachbarzellenlisten LoN der beiden aktuell überwachten Basisstationen gespeichert sind. In diesem Beispiel die Nachbarzellenlisten LoN1 von Basisstation BS1 und LoN2 von Basisstation BS2. Des weiteren können weitere Parameter gespeichert sein.

Weiterhin ist in jeder Basisstation 2 eine angepasste Nachbarzellenliste LoN (List of Neighbors) abgelegt. Diese Listen werden durch Einmessen der vorhandenen Topologie, d.h. durch Erfassen der Abstände zu benachbarten Basisstationen 2 bestimmt. Dabei werden die einzelnen Feldstärken (RSSI) gemessen und in Bezug auf die jeweilige sendende Basisstation 2 ausgewertet. Zusätzlich können auch weitere Parameter wie die Lastinformation oder dergleichen berücksichtigt werden.

Die ermittelten Werte werden bei Bedarf in Form einer Tabelle an das mobile Telekommunikations-Endgerät 1 übertragen.

Der relative Abstand wird beispielsweise aus der im Telekommunikations-Endgerät 1 gemessenen Funkfelsstärke (RSSI) nach der Formel annähernd berechnet:

$$10\text{^}((\text{TxPower [dBm]} - \text{RSSI [dBm]} - 20 * \gamma) / (10 * \gamma))$$

Darin bedeuten

| TxPower | Sendeleistung der Basisstation in dBm |
| RSSI | Empfangsfeldstärke in dBm |
| $\gamma$ | empirischer Faktor, der den Einfluss von Reflexionen und Beugung berücksichtigt, in Gebäuden z.B. $\gamma$ = 2,5...3. |

Aus der Nachbarzellenliste LoN mit den verfügbaren Basisstationen 2 (BS1 bis BS6) wählt das mobile Telekommunikations-Endgerät 1 mit Hilfe des erfindungsgemäßen Algorithmus eine geeignete Basisstation 2 aus, zu der es dann wechselt, wenn die Verbindung zu einer der beiden aktuell überwachten Basisstationen 2 schlechter wird. Alternativ könnte auch gewechselt werden, wenn die Funkverbindung zu einer anderen Basisstation 2 besser ist.

Grundlage für den Algorithmus sind die aktuellen Empfangsfeldstärke-Werte (RSSI-Werte) von zwei benachbarten Basisstationen 2, in dessen unmittelbarer Nähe sich das Telekommunikations-Endgerät 1 befindet. Das Telekommunikations-Endgerät 1 überwacht permanent diese beiden Basisstationen 2 bezüglich der Verbindungsqualität. Dazu muss es je nach Funkstandard, beispielsweise beim DECT-Standard permanent den Broadcast-Kanal der beiden Basisstationen 2 empfangen, um die Feldstärkemessungen durchzuführen. Beim Bluetooth-Standard muss es (im Park-Modus) zwei passive Verbindungen in einem Stromsparmodus zu den beiden Basisstationen 2 aufrechterhalten. Eine dieser beiden Verbindungen kann bei Bedarf eine aktive Verbindung werden, beispielsweise bei einem Telefongespräch oder bei der Datenübertragung. Die aktive Verbindung wird in vorteilhafter Weise über die Basisstation mit der besseren Verbindungsqualität geführt.

Wird die Verbindungsqualität zu einer der beiden Basisstationen 2 schlecht. So wird das Telekommunikations-Endgerät 1 Handover oder Roaming durchführen. Dazu wählt es eine dritte (neue) Basisstation 2 mittels des Algorithmus aus, ohne vorher aktiv nach dieser Basisstation 2 suchen zu müssen und baut eine Verbindung zu dieser auf. Die passive Verbindung zu der Basisstation 2 mit der schlechten Verbindungsqualität wird abgebaut, so dass immer nur zwei Basisstationen 2 überwacht werden.

Entsprechend der Figur 1 hat das mobile Telekommunikations-Endgerät 1 in diesem Beispiel zu der Basisstation BS1 den Abstand d1 und zu der Basisstation BS2 den Abstand d2. Der Abstand der Basisstation BS1 zur Basisstation BS2 ist in der entsprechenden Nachbarzellenliste LoN1(BS2) festgelegt. Die relativen Abstände d1, d2 der einzelnen Basisstationen 2 zum mobilen Telekommunikations-Endgerät 1 werden, wie bereits erwähnt, beispielsweise durch Messung des RSSI-Wertes (Receiver Signal Strength Indicator) bestimmt.

Wie in der Figur 1 erkennbar ist, ist das mobile Telekommunikations-Endgerät 1 näher an der Basisstation BS2 positioniert als an der Basisstation BS1. Alle Basisstationen 2, die näher zur Basisstationen BS2 positioniert sind, sind daher für einen Wechsel geeignet. Das mobile Telekommunikations-Endgerät 1 bewegt sich somit etwa parallel zur Linie BS1/BS2 in Richtung BS3. Für diesen Fall gilt für den Algorithmus die Formel

$$(d1-d2) > LoN1(BS2)/2.$$

Die Nachbarzellenlisten LoN1 und LoN2 der Basisstationen BS1 beziehungsweise BS2 werden positiv beziehungsweise negativ bewertet. Je nach ihrer relativen Lage werden die einzelnen Abstände der Basisstationen BS1 bis BS6 als Zahlenwerte in die beiden Nachbarzellenlisten LoN1, LoN2 ermittelt und in eine Kandidatenliste 10 (LoC, List of Candidates) eingetragen. Dabei wird die Priorität der Basisstationen BS1-BS6 in der Kandidatenliste LoC mithilfe der beiden Nachbarzellenlisten LoN1, LoN2 nach der Formel bestimmt:

$$LoC(BS) = LoN1(BS) - LoN2(BS).$$

Dabei ist LoC(BS) ein einer Basisstation BS zugeordneter Tabellenwert der Kandidatenliste LoC und LoN1(BS), LoN2(BS) sind der entsprechenden Basisstation BS zugeordnete Tabellenwerte der beiden Nachbarzellenlisten LoN1, LoN2. Die Basisstation BS steht hier für jede beliebige der Basisstationen BS1-BS6.

Figur 2 zeigt eine Kandidatenliste 10, in der Werte zu den beiden Nachbarzellenlisten LoN1 und LoN2 in Bezug auf die Basisstationen BS1 bis BS6 eingetragen sind. Für die Basisstation BS1 (in der ersten Zeile der Kandidatenliste 10) ist in der Spalte LoN1 eine ‚0' eingetragen, weil dies der eigene Listenwert ist. Der Abstandwert der Basisstation BS1 zur Basisstation BS2 beträgt für die Spalte LoN2 15. Nach der obigen Formel ergibt sich somit der LoC-Wert in der vierten Spalte mit -15.

Auf Grund des hohen negativen Wertes wird die Verbindung als schlecht angesehen (Bewertungsspalte).

Entsprechende Zahlen sind in den Spalten LoN1 und LoN2 für die Basisstationen BS2 bis BS6 eingetragen. So hat in der Nachbarzellenliste LoN1 die Basisstation BS2 bezüglich der Basisstation BS1 den Wert 15, die Basisstation BS3 den Wert 30, die Basisstation BS4 den Wert 15, die Basisstation BS5 den Wert 21 und die Basisstation BS6 den Wert 33. Diese Werte ergeben sich im wesentlichen aus der geometrischen Anordnung der Basisstationen BS1 bis BS6, wie der Figur 1 entnehmbar ist. Entsprechende Werte gelten für die Nachbarzellenliste LoN2 der Basisstation BS2.

In der Spalte LoC stehen die errechneten Differenz-Werte der Nachbarzellenlisten LoN1, LoN2 und in der Bewertungsspalte ist die Priorität ablesbar.

Die Basisstation BS3 hat neben der Basisstation BS2 mit dem Wert 15 die höchste Bewertung, gefolgt von der Basisstation BS6 mit dem Wert 12. Da aktuell die Basisstationen BS1, BS2 überwacht werden und die Verbindung zu BS1 als schlecht eingestuft wird, ist die Basisstation BS3 somit für einen Wechsel der erste Kandidat und die Basisstation BS6 der zweite Kandidat. Die Verbindung zu BS1 wird abgebaut und es wird eine Verbindung zu BS3 aufgebaut. Danach werden folglich die beiden Basisstationen BS2 und BS3 überwacht.

Figur 3 zeigt ein zweites Ausführungsbeispiel mit einer Berechnung des erfindungsgemäßen Algorithmus. In diesem Fall wird angenommen, dass wieder eine Handover- oder Roaming-Prozedur gestartet wird und sich das mobile Telekommunikations-Endgerät 1 in Richtung der Basisstation BS5 bewegt. Die relativen Abstände d1, d2 zu den benachbarten Basisstationen BS1, BS2 werden wieder mit dem RSSI-Wert bestimmt. Die Abstände der Basisstationen BS1 und BS2 werden den Nachbarzellenlisten LoN1, LoN2 entnommen.

Wie in Figur 3 dargestellt, ist das mobile Telekommunikations-Endgerät 1 von den beiden Basisstationen BS1 und BS2 etwa gleich weit entfernt. Man kann daraus schließen, dass es sich entlang der Medianebene bewegt. Da die Verbindung zur Basisstation BS1 schlechter ist, befindet sich das mobile Telekommunikations-Endgerät 1 näher auf der Seite von der Basisstation BS2. In diesem Fall sind alle Basisstationen 2, die von den beiden Basisstationen BS1 und BS2 gleich weit entfernt sind, die geeigneten Basisstationen 2. Für diese Konstellation errechnet sich die Kandidatenliste 10 nach der Formel

$$LoC(BS) <= -|LoN2\,(BS)-LoN1(BS)|,$$

wobei LoC(BS) ein einer Basisstation BS zugeordneter Tabellenwert der Kandidatenliste LoC ist und LoN1(BS), LoN2(BS) der entsprechenden Basisstation BS zugeordnete Tabellenwerte der Nachbarzellenlisten LoN1, LoN2 sind und wobei die Basisstation BS eine beliebige der Basisstationen BS1-BS6 ist.

Figur 4 zeigt eine zweite Tabelle, bei der jedoch die Werte für die Nachbarzellenliste LoN1 und LoN2 gleichgeblieben sind, da sich an der geographischen Topographie der Basisstationen 2 nichts geändert hat. Lediglich die LoC-Werte ändern sich entsprechend der hier gültigen Formel. Aus den geänderten LoC-Werten (Prioritäten) ergibt sich eine entsprechend neue Bewertung für die Kandidaten. Als Kandidat 1 gilt jetzt die Basisstation BS5 mit der besten Bewertung (-6), gefolgt von der Basisstation BS4 usw.

Figur 5 zeigt in schematischer Ausführung einen Teil eines Blockschaltbildes eines mobilen Telekommunikations-Endgerätes 1, das eine Steuereinheit 5 und einen Speicher, vorzugsweise einen DRAM-Speicher (Dynamic Random Access Memory) aufweist. Die Steuereinheit 5 weist im wesentlichen ein Softwareprogramm auf, mit dem der erfindungsgemäße Algorithmus zur Auswahl einer geeigneten Basisstation 2 umgesetzt ist. Die relevanten Daten und Tabellen werden in dem Speicher 6 abgelegt.

Bezugzeichenliste

| | |
|---|---|
| 1 | mobiles Telekommunikations-Endgerät |
| 2 | Basisstation |
| 5 | Steuereinheit |
| 6 | Speicher |
| 10 | Kandidatenliste |
| d1 | Abstand zwischen dem mobile Telekommunikations-Endgerät 1 und der Basisstation BS1 |
| d2 | Abstand zwischen dem mobile Telekommunikations-Endgerät 1 und der Basisstation BS2 |
| LoC | Kandidatenliste |
| LoN | Nachbarzellenliste |
| LoN1 | Nachbarzellenliste der Basisstation BS1 |
| LoN2 | Nachbarzellenliste der Basisstation BS2 |
| LoN1(BS2) | Abstand der Basisstation BS1 von der Basisstation BS2 |

**Patentansprüche**

**1.** Verfahren zur Auswahl einer geeigneten Basisstation (2) in einem Mehrzellen-Funksystem, wobei ein mobiles Telekommunikations-Endgerät (1) beim Roaming oder Handover von einer aktuellen Basisstation zu einer geeigneten Basisstation wechselt, mit der die Funkverbindung besser ist, umfassend die Verfahrensschritte:

a) Herstellen einer Verbindung zu einer ersten und einer zweiten Basisstation (BS1, BS2) durch das mobile Endgerät (1);
b) Übertragen einer ersten Nachbarzellenliste (LoN1) der ersten Basisstation (BS1) zum mobilen Telekommunikations-Endgerät (1), wobei die erste Nachbarzellenliste (LoN1) die relativen Abstände zwischen der ersten Basisstation (BS1) und ihr benachbarten Basisstationen (BS2-BS6) umfasst;

c) Überwachen der Verbindungsqualität zu der ersten und der zweiten Basisstation (BS1, BS2) durch das mobile Telekommunikations-Endgerät (1);

d) Bewerten der Basisstationen (BS1-BS6) in der ersten Nachbarzellenliste (LoN1) bezüglich ihrer Verbindungsqualität mit Hilfe eines vorgegebenen Algorithmus, der die relativen Abstände der Basisstationen (BS1-BS6) zueinander berücksichtigt;

e) Herstellen einer Verbindung zu einer dritten Basisstation (BS3-BS6) mit einer verbesserten Verbindungsqualität auf Grundlage des Bewertungsergebnisses; und

f) Abbau der Verbindung zu derjenigen Basisstation der ersten und zweiten Basisstation (BS1, BS2), die eine schlechtere Verbindungsqualität aufweist,

**dadurch gekennzeichnet,**
**dass** im Schritt b) zusätzlich eine zweiten Nachbarzellenliste (LoN2) der zweiten Basisstation (BS2) zum mobilen Telekommunikations-Endgerät (1) übertragen wird, wobei die zweite Nachbarzellenliste (LoN2) die relativen Abstände zwischen der zweiten Basisstation (BS2) und ihr benachbarten Basisstationen (BS1, BS3-BS6) umfasst; und dass im Schritt d) der Algorithmus die relative Bewegungsrichtung des mobilen Telekommunikations-Endgeräts (1) in Bezug auf die erste und die zweite Basisstation (BS1, BS2) berücksichtigt, wobei zusätzlich die Basisstationen (BS1-BS6) in der zweiten Nachbarzellenliste (LoN2) bezüglich ihrer Verbindungsqualität bewertet werden.

2. Verfahren nach Anspruch 1,
**dadurch gekennzeichnet,**
**dass** der Algorithmus die Abstände (d1,d2) zwischen dem mobilen Telekommunikations-Endgerät (1) und den beiden überwachten Basisstationen (BS1, BS2) berücksichtigt.

3. Verfahren nach Anspruch 2,
**dadurch gekennzeichnet,**
**dass** die relativen Abstände (d1, d2) zu den beiden überwachten Basisstationen (BS1, BS2) unter Zuhilfenahme des RSSI-Wertes bestimmt werden.

4. Verfahren nach einem der vorhergehenden Ansprüche,
**dadurch gekennzeichnet,**
**dass** der Algorithmus eine Bewertung durchführt, ob die Differenz des Abstandes zwischen dem mobilen Telekommunikations-Endgerät (1) und den beiden überwachten Basisstationen (BS1, BS2) größer, gleich oder kleiner ist als der halbe Abstand der beiden Basisstationen (BS1, BS2) untereinander.

5. Verfahren nach einem der vorhergehenden Ansprüche,
**dadurch gekennzeichnet,**
**dass** der Algorithmus nach der Formel

$$(d1-d2) > LoN1(BS2)/2$$

berechnet wird, wobei d1, d2 die Abstände des Telekommunikations-Endgerätes (1) zu zwei benachbarten Basisstationen (BS3, BS4) und LoN1(BS2) der Abstand zwischen den beiden Basisstationen (BS1, BS2) ist.

6. Verfahren nach Anspruch 5,
**dadurch gekennzeichnet,**
**dass** die in Frage kommenden benachbarten Basisstationen (BS3, BS4) mittels einer Kandidatenliste (LoC) bestimmt werden.

7. Verfahren nach Anspruch 6,
**dadurch gekennzeichnet,**
**dass** die Kandidatenliste (LoC) nach der Formel

$$LoC(BS) = LoN1(BS) - LoN2(BS)$$

berechnet wird, wobei LoC(BS) ein einer Basisstation (BS) zugeordneter Tabellenwert der Kandidatenliste (LoC) ist und LoN1(BS) und LoN2(BS) die der entsprechenden Basisstation (BS) zugeordneten Tabellenwerte der Nachbarzellenlisten (LoN1, LoN2) der beiden überwachten Basisstationen (BS1, BS2) sind, wobei die Basisstation (BS) eine beliebige der möglichen Basisstationen (BS1-BS6) ist.

8. Verfahren nach einem der Ansprüche 1 bis 4,
**dadurch gekennzeichnet,**
**dass** der Algorithmus nach der Formel

$$(d1-d2) <= LoN1(BS2)/2$$

berechnet wird, wobei d1, d2 die Abstände des Telekommunikations-Endgerätes (1) zu zwei benachbarten Basisstationen (BS3, BS4) und LoN1(BS2) der Abstand zwischen den beiden Basisstationen (BS1, BS2) ist.

9. Verfahren nach Anspruch 8,
**dadurch gekennzeichnet,**

**dass** die Kandidatenliste (LoC) nach der Formel

$$LoC\ (BS)=-|LoN2(BS)-LoN1(BS)|$$

bestimmt wird, wobei LoC(BS) ein einer Basisstation (BS) zugeordneter Tabellenwert der Kandidatenliste (LoC) und LoN1(BS) und LoN2(BS) die der entsprechenden Basisstation (BS) zugeordneten Tabellenwerte der Nachbarzellenlisten (LoN1, LoN2) der beiden überwachten Basisstationen (BS1, BS2) sind, wobei die Basisstation (BS) eine beliebige der möglichen Basisstationen (BS1-BS6) ist.

**Claims**

1. Method for selecting a suitable base station (2) in a multi-cell radio system, wherein during roaming or handover a mobile telecommunication terminal device (1) changes from a current base station to a suitable base station with which the radio connection is better, comprising the method steps of:

   a) producing a connection to a first and a second base station (BS1, BS2) via the mobile terminal device (1);
   b) transmitting a first list of neighbours (LoN1) of the first base station (BS1) to the mobile telecommunication terminal device (1), wherein the first list of neighbours (LoN1) includes the relative distances between the first base station (BS1) and its neighbouring base stations (BS2-BS6);
   c) monitoring the connection quality to the first and to the second base station (BS1, BS2) via the mobile telecommunication terminal device (1);
   d) evaluating the base stations (BS1-BS6) in the first list of neighbours (LoN1) with respect to their connection quality with the aid of a predetermined algorithm which takes into account the relative distances between the base stations (BS1-BS6) with respect to each other;
   e) producing a connection to a third base station (BS3-BS6) with an improved connection quality on the basis of the evaluation result; and
   f) disconnecting the connection to the respective base station of the first and second base station (BS1, BS2) which has a poorer connection quality,

   **characterised in that**
   in step b) a second list of neighbours (LoN2) of the second base station (BS2) is additionally transmitted to the mobile telecommunication terminal device (1), wherein the second list of neighbours (LoN2) includes the relative distances between the second base station (BS2) and its neighbouring base stations (BS1, BS3-BS6); and
   in step d) the algorithm takes into account the relative direction of movement of the mobile telecommunication terminal device (1) with respect to the first and the second base station (BS1, BS2), wherein in addition the base stations (BS1-BS6) in the second list of neighbours (LoN2) are evaluated with respect to their connection quality.

2. Method as claimed in claim 1, **characterised in that** the algorithm takes into account the distances (d1, d2) between the mobile telecommunication terminal device (1) and the two monitored base stations (BS1, BS2).

3. Method as claimed in claim 2, **characterised in that** the relative distances (d1, d2) to the two monitored base stations (BS1, BS2) are determined with the assistance of the RSSI value.

4. Method as claimed in any one of the preceding claims, **characterised in that** the algorithm effects an evaluation as to whether the difference in the distance between the mobile telecommunication terminal device (1) and the two monitored base stations (BS1, BS2) is greater than, equal to or smaller than half the distance between the two base stations (BS1, BS2) with respect to each other.

5. Method as claimed in any one of the preceding claims, **characterised in that** the algorithm is calculated according to the formula

$$(d1-d2)>LoN1(BS2)/2$$

   wherein d1, d2 are the distances from the telecommunication terminal device (1) to two neighbouring base stations (BS3, BS4) and LoN1(BS2) is the distance between the two base stations (BS1, BS2).

6. Method as claimed in claim 5, **characterised in that** the neighbouring base stations concerned (BS3, BS4) are determined by means of a list of candidates (LoC).

7. Method as claimed in claim 6, **characterised in that** the list of candidates (LoC) is calculated according to the formula

$$LoC(BS)=LoN1(BS)-LoN2(BS)$$

   wherein LoC(BS) is a tabular value, associated with a base station (BS), of the list of candidates (LoC), and LoN1(BS) and LoN2(BS) are the tabular values, associated with the corresponding base station (BS), of the list of neighbours (LoN1, LoN2) of the two monitored base stations (BS1, BS2), wherein the base station (BS) is any of the possible base stations (BS1-BS6).

8. Method as claimed in any one of claims 1 to 4, **characterised in that** the algorithm is calculated according to the formula

$$(d1-d2)<=LoN1(BS2)/2$$

wherein d1, d2 are the distances from the telecommunication terminal device (1) to two neighbouring base stations (BS3, BS4) and LoN1(BS2) is the distance between the two base stations (BS1, BS2).

9. Method as claimed in claim 8, **characterised in that** the list of candidates (LoC) is determined according to the formula

$$LoC(BS)=-|LoN2(BS)-LoN1(BS)|$$

wherein LoC(BS) is a tabular value, associated with a base station (BS), of the list of candidates (LoC), and LoN1(BS) and LoN2(BS) are the tabular values, associated with the corresponding base station (BS), of the lists of neighbours (LoN1, LoN2) of the two monitored base stations (BS1, BS2), wherein the base station (BS) is any of the possible base stations (BS1-BS6).

## Revendications

1. Procédé de sélection d'une station de base appropriée (2) dans un système radio cellulaire, selon lequel un terminal de télécommunication mobile (1), en cas d'itinérance ou de transfert intercellulaire, passe d'une station de base actuelle à une station de base appropriée afin d'améliorer la liaison radio, et comprenant les étapes consistant à :

   a) établir une liaison vers une première et une deuxième station de base (BS1, BS2) par le terminal mobile (1);
   b) transmettre une première liste de cellules voisines (LoN1) de la première station de base (BS1) au terminal de télécommunication mobile (1), la première liste de cellules voisines (LoN1) comprenant les distances relatives entre la première station de base (BS1) et les stations de base voisines (BS2-BS6) :
   c) surveiller la qualité de la liaison vers la première et la deuxième station de base (BS1, BS2) par le terminal de télécommunication mobile (1) ;
   d) évaluer les stations de base (BS1-BS6) dans la première liste de cellules voisines (LoN1) vis-à-vis de leur qualité de liaison à l'aide d'un algorithme prédéterminé, qui prend en compte les distances relatives entre les stations de base (BS1-BS6) ;
   e) établir une liaison vers une troisième station de base (BS3-BS6) avec une qualité de liaison améliorée sur la base du résultat de l'évaluation ; et
   f) annuler la liaison vers la station de base, parmi la première et la deuxième station de base (BS1, BS2), qui présente la qualité de liaison la plus mauvaise,

**caractérisé en ce qu'**
à l'étape b), une deuxième liste de cellules voisines (LoN2) de la deuxième station de base (BS2) est en outre transmise au terminal de télécommunication mobile (1), la deuxième liste de cellules voisines (LoN2) comprenant les distances relatives entre la deuxième station de base (BS2) et les stations de base voisines (BS1, BS3-BS6) ; et à l'étape d), l'algorithme prend en compte la direction de mouvement relative du terminal de télécommunication mobile (1) par rapport à la première et la deuxième station de base (BS1, BS2), les stations de base (BS1-BS6) étant en outre évaluées dans la deuxième liste de cellules voisines (LoN2) vis-à-vis de leur qualité de liaison.

2. Procédé selon la revendication 1,
   **caractérisé en ce que**
   l'algorithme prend en compte les distances (d1, d2) entre le terminal de télécommunication mobile (1) et les deux stations de base surveillées (BS1, BS2).

3. Procédé selon la revendication 2,
   **caractérisé en ce que**
   les distances relatives (d1, d2) par rapport aux deux stations de base surveillées (BS1, BS2) sont déterminées à l'aide de la valeur RSSI (Receiver Signal Strength Indicator).

4. Procédé selon l'une des revendications précédentes,
   **caractérisé en ce que**
   l'algorithme évalue si la différence de distance entre le terminal de télécommunication mobile (1) et les deux stations de base surveillées (BS1, BS2) est supérieure, égale ou inférieure à la moitié de la distance entre les deux stations de base (BS1, BS2).

5. Procédé selon l'une des revendications précédentes,
   **caractérisé en ce que**
   l'algorithme est calculé d'après la formule (d1-d2) > LoN1(BS2) / 2 où d1, d2 sont les distances entre le terminal de télécommunication (1) et deux stations de base voisines (BS3, BS4) et LoN1(BS2) est la distance entre les deux stations de base (BS1, BS2).

6. Procédé selon la revendication 5,
**caractérisé en ce que**
les stations de base voisines en question (BS3, BS4) sont déterminées au moyen d'une liste de candidats (LoC).

7. Procédé selon la revendication 6,
**caractérisé en ce que**
la liste de candidats (LoC) est calculée d'après la formule

$$LoC(BS) = LoN1(BS) - LoN2(BS)$$

où LoC(BS) est une valeur tabulaire de la liste de candidats (LoC) associée à une station de base (BS) et LoN1(BS) et LoN2(BS) sont les valeurs tabulaires des listes de cellules voisines (LoN1, LoN2) des deux stations de base surveillées (BS1, BS2) associées à la station de base correspondante (BS), la station de base (BS) étant l'une quelconque des stations de base possibles (BS1-BS6).

8. Procédé selon l'une des revendications 1 à 4,
**caractérisé en ce que**
l'algorithme est calculé d'après la formule

$$(d1-d2) <= LoN1(BS2) / 2$$

où d1, d2 sont les distances entre le terminal de télécommunication (1) et deux stations de base voisines (BS3, BS4) et LoN1(BS2) est la distance entre les deux stations de base (BS1, BS2).

9. Procédé selon la revendication 8,
**caractérisé en ce que**
la liste de candidats (LoC) est calculée d'après la formule

$$LoC(BS) = -|LoN2(BS) - LoN1(BS)|$$

où LoC(BS) est une valeur tabulaire de la liste de candidats (LoC) associée à une station de base (BS) et LoN1(BS) et LoN2(BS) sont les valeurs tabulaires des listes de cellules voisines (LoN1, LoN2) des deux stations de base surveillées (BS1, BS2) associées à la station de base correspondante (BS), la station de base (BS) étant l'une quelconque des stations de base possibles (BS1-BS6).

BS4 2 BS5 2 BS6 2

d1 1
d2

2 BS1 BS2 2 2 BS3

LoN1(BS2)

**Fig. 1**

| | LoN1 | LoN2 | LoC=LoN1-LoN2 | Bewertung |
|---|---|---|---|---|
| BS1 | 0 | 15 | -15 | Schlechte Verbindung |
| BS2 | 15 | 0 | 15 | Bestehende Verbindung |
| BS3 | 30 | 15 | 15 | Kandidat 1 |
| BS4 | 15 | 21 | -6 | |
| BS5 | 21 | 15 | 6 | |
| BS6 | 33 | 21 | 12 | Kandidat 2 |

10

**Fig. 2**

BS4 • ~2    BS5 • ~2    BS6 • ~2

d1 ~

~1

d2 ~

2 ~ BS1    BS2 ~ 2    • ~2
                        BS3

LoN1(BS2)

**Fig. 3**

| | LoN1 | LoN2 | LoC= -\|LoN1-LoN2\| | Bewertung |
|---|---|---|---|---|
| BS1 | 0 | 15 | -15 | Schlechte Verbindung |
| BS2 | 15 | 0 | -15 | Bestehende Verbindung |
| BS3 | 30 | 15 | -15 | |
| BS4 | 15 | 21 | -6 | Kandidat 2 |
| BS5 | 21 | 15 | -6 | Kandidat 1 |
| BS6 | 33 | 21 | -12 | |

10 ↗

**Fig. 4**

1 ~

5    6

**Fig. 5**